# NEW EUROPEAN PATENT SPECIFICATION

(11) **EP 0 993 989 B2**
(45) Date of publication and mention of the opposition decision: **28.03.2012**
(45) Mention of the grant of the patent: 20.06.2007
(21) Application number: 99120394.4
(22) Date of filing: 13.10.1999
(51) Int. Cl.: B60Q 1/26, F21S 8/10

(54) **Lighting device of simplified construction, in particular for a vehicle**
Vereinfachte Konstruktion für eine Kfz-Beleuchtungseinrichtung
Construction simplifiée pour dispositif d'éclairage de véhicule

(30) Priority: 14.10.1998 IT MI982210
(43) Date of publication of application: 19.04.2000
(73) Proprietor: Automotive Lighting Italia S.p.A., 10078 Venaria Reale (Torino) (IT)
(72) Inventor: Cubito, Luciano, 10100 Torino (IT)
(74) Representative: Jorio, Paolo

(56) References cited:
- EP-A- 0 715 988
- EP-A2- 0 869 312
- DE-A1- 3 305 218
- DE-U- 1 980 059
- FR-A- 2 733 950
- JP-A- 09 002 142
- JP-A- 09 099 777
- US-A- 4 849 861

## Description

The present invention relates to an optical device, in particular for a vehicle, provided with a light collimation device and a light diffusion device produced in order to simplify assembly.

As is known, i.e from US 4,849,861, lighting units that incorporate parking and indicator lights are provided with optical devices for the collimation and diffusion of the light in order to obtain a lighting and/or external visibility effect that has specific characteristics.

These devices generally comprise a Fresnel lens member (collimation) and an optical diffuser (diffusion) which are produced in at least two separate pieces and subsequently assembled during mounting of the lighting unit.

This entails some drawbacks, as the number of parts to be produced requires complex and costly industrial processes both as regards the processing of the components themselves and the procedures for their assembly which are not very suited to automation.

Moreover, the quality of the finished product and the percentage of rejects may also be exacerbated as a result, for instance, of the chain of tolerances that has to be provided or of processing errors.

The object of the present invention is to provide a lighting unit that is free from the above-mentioned drawbacks and that is simple and economic to produce.

The present invention therefore relates to a multiple lighting unit, in particular for a vehicle, comprising at least one support housing, a first lighting device, provided with light diffusion means, in particular a parking light, a second lighting device, provided with light collimation means, in particular an indicator light, and an outer lens, the light diffusion means being formed by an optical diffuser disposed in front of at least the first and second lighting devices and the light collimation means being formed by a Fresnel lens member interposed between the second lighting device and the optical diffuser, as claimed in Claim 1.

It will be appreciated from the above that the production of the prismatic lens and the Fresnel lenses in one piece makes it possible to reduce the number of components needed to produce the lighting unit.

This entails a first economic advantage since the number of moulding processes is reduced.

Moreover, the integration of several members into one part makes it possible to eliminate some of the manufacturing tolerances that have to be respected for the assembly of the components, thereby improving the quality of the finished product and reducing the number of rejects.

A further advantage of the invention lies in the fact that the assembly of the components is simplified and more suited to automation.

The present invention is set out in further detail in the following description of a preferred embodiment thereof, given purely by way of non-limiting example with reference to the accompanying drawings, in which:
Fig. 1 is a front elevation of a lighting unit of the present invention;
Fig. 2 is a lateral elevation, in cross-section along the line II-II, of the lighting unit of Fig. 1;
Fig. 3 is a top plan view, in cross-section along the line III-III, of the lighting unit of Fig. 1;
Fig. 4 is a perspective view of a detail of the lighting unit of Fig. 1;
Fig. 5 is a front elevation of the detail of Fig. 4;
Fig. 6 is a top plan view of the detail of Fig. 4;
Fig. 7 is a rear elevation of the detail of Fig. 4.

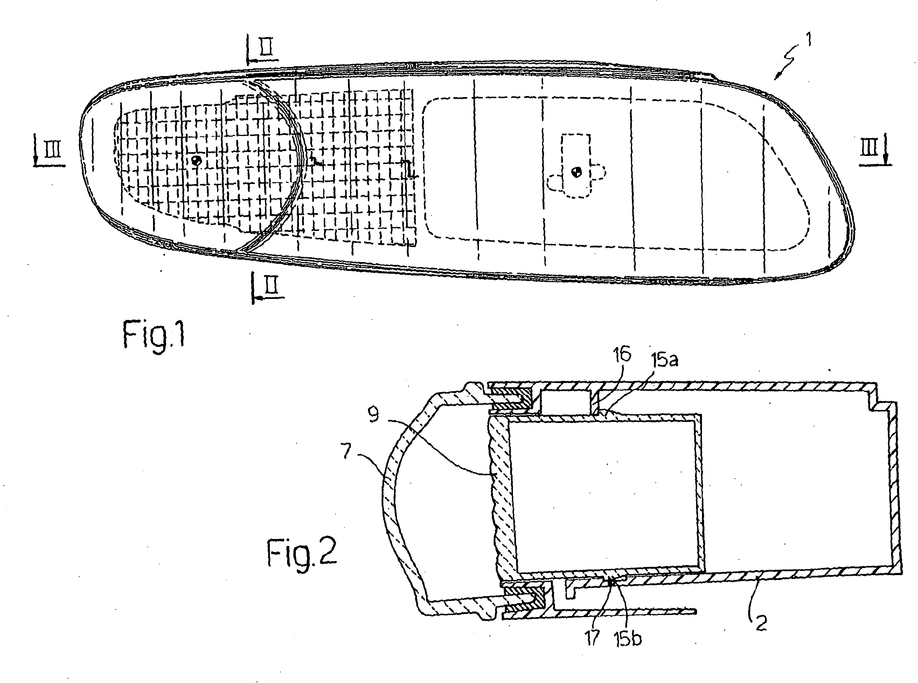

In Figs. 1 to 3, a lighting unit comprising a support housing 2, a parking light 3, an indicator light 4, light diffusion means 5 and light collimation means 6 is shown overall by 1.

The lighting unit 1 further comprises an outer front lens 7 and a fog lamp 8 which are known and not described in further detail.

The light diffusion means 5 are formed by an optical diffuser having a smooth surface 5a and a prismatic surface 5b.

The light collimation means 6 are formed by a Fresnel lens member obtained in one piece, having a smooth surface 6a and a surface 6b on which a group of Fresnel lens is obtained by moulding.

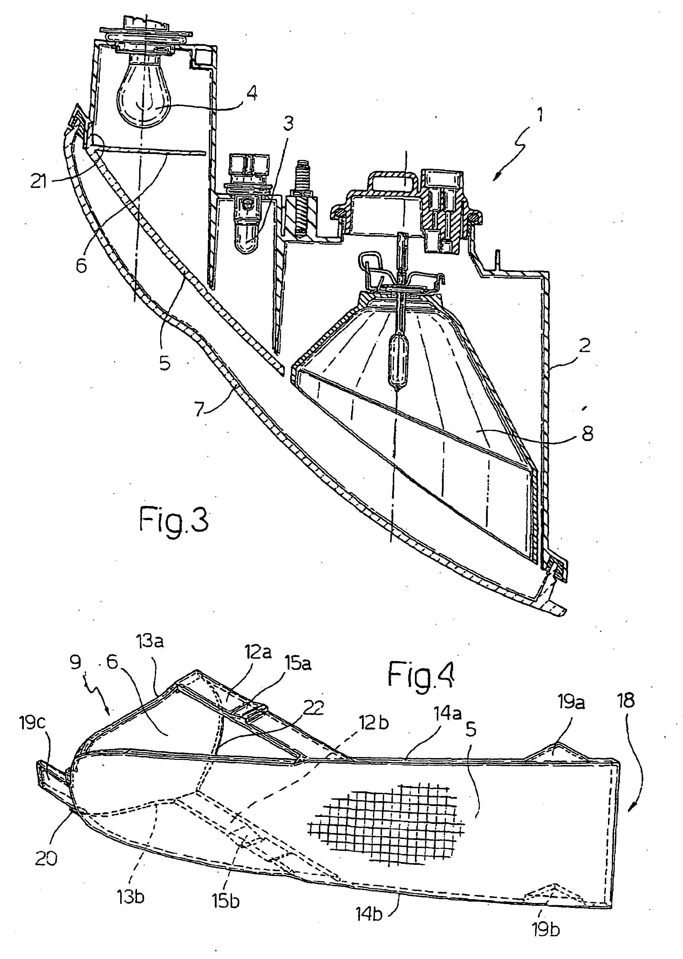

The diffuser 5 and the Fresnel lens member 6, at their respective first ends 10 and 11, are connected rigidly to form a single component in order to form an optical device 9 (shown in Figs. 4 to 7) adapted to carry out the functions of light collimation and diffusion.

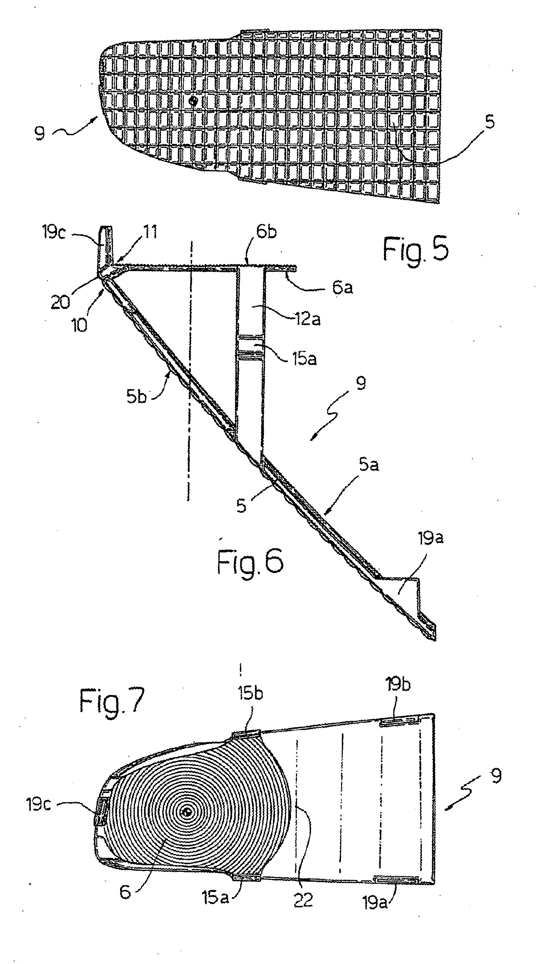

Moreover, with particular reference to Figs. 4 and 6, the diffuser 5 and the Fresnel lens member 6 are reciprocally disposed to form an acute angle with their respective surfaces 5a and 6a (both smooth) facing one another and are further connected by a pair of braces 12a and 12b.

The brace 12a extends rigidly between respective upper edges 13a and 14a of the diffuser 5 and the Fresnel lens member 6.

Similarly, the brace 12b extends between respective lower edges 13b and 14b of the diffuser 5 and the Fresnel lens member 6.

The braces 12a and 12b also bear respective locking teeth 15a and 15b obtained rigidly and extending externally from opposite sides.

These locking teeth 15a and 15b are respectively adapted to cooperate with a projection 16 and a shoulder 17 of the support housing 2 in order to enable the snap-locking of the optical device 9 on this housing 2, as shown in Fig. 2.

In the vicinity of one of its front ends 18, the diffuser 4 rigidly bears a pair of lugs 19a and 19b projecting internally respectively from the upper edge 14a and the lower edge 16b and adapted to maintain the optical device 9 in its operating position, as described below.

A third lug 19c is obtained rigidly with the optical device 9 and projects to the rear from an edge 20 of this device at the junction of the first ends 10 and 11 respectively of the optical diffuser 5 and the Fresnel lens member 6.

In operation, the lug 19c is inserted in a corresponding housing 21 provided in the support housing 2.

The braces 12a and 12b are provided in a longitudinal position such that they extend from a second end 22 of the Fresnel lens member 6 to an intermediate portion of the diffuser 5.

When the optical device 9 is in its operating position, the optical diffuser 5 is disposed in front of the parking light 3 and the indicator light 4, while the Fresnel lens member 6 is interposed between the indicator light 4 and the optical diffuser 5.

The optical effect obtained in this way is twofold.

The diffuser 5, which intercepts the light beams generated both by the parking light 3 and by the indicator light 4, makes these latter more comparable.

Moreover, the Fresnel lens member 6 is adapted to mask, to an external observer, the presence of the coloured lamp of the indicator light 4.

It will be appreciated that modifications and variations not departing from the scope of protection of the present invention may be made to the lighting unit 1.

In particular, the optical device 9 may be modified such that the diffuser 5 extends so as also to cover the front of a headlamp that may be disposed adjacent to the parking light 3 or the indicator light 4.

Moreover, use may be made of optical diffusers differing from that described and comprising, for instance, a surface on which microprisms or holograms are obtained in place of the prismatic surface 5b.

It will lastly be appreciated that the lugs and locking teeth for the snap-locking of the optical device 9 on the housing 2 may differ from what has been described above in terms of their number, shape and arrangement.

## Claims

1. A multiple lighting unit (1), in particular for a vehicle, comprising at least one support housing (2), a first lighting device, provided with light diffusion means (5), in particular a parking light (3), a second lighting device, provided with light collimation means (6), in particular an indicator light (4), and an outer lens (7), the light diffusion means (5) being formed by an optical diffuser (5) disposed in front of at least the first (3) and second (4) lighting devices and the light collimation means (6) being formed by a Fresnel lens member interposed between the second lighting device (4) and the optical diffusers (5), wherein the Fresnel lens member (6) and the optical diffuser (5) are connected rigidly to form a single component, in order to form an optical device (9) adapted to carry out the functions of light collimation and diffusion; wherein the optical diffuser (5) and the Fresnel lens (6) member are reciprocally connected by their respective first ends (10, 11) in order to form an acute angle between one another, **characterised in that** the optical diffuser (5) and the Fresnel lens member (6) comprise respective smooth surfaces (5a, 6a), the optical diffuser (5) comprising a second prismatic surface (5b), the Fresnel lens member (6) comprising a surface bearing a group of Fresnel lenses (6b) and the first smooth surfaces (5a, 6a) being disposed to face one another.

2. A lighting unit (1) as claimed in claim 1, **characterised in that** the optical device comprises means for snap-locking (15a, 15b) on the support housing (2).

3. A lighting unit (1) as claimed in any one of the preceding claims, **characterised in that** the optical diffuser (5) and the Fresnel lens member (6) are further connected by a first and a second brace (12a, 12b), the first brace (12a) extending rigidly between respective upper edges (13a, 14a) and the second brace extending rigidly between respective lower edges (13b, 14b) of the optical diffuser (5) and the Fresnel lens (6) member.

4. A lighting unit (1) as claimed in claim 3, **characterised in that** the first and second braces (12a, 12b) each rigidly bear at least one locking tooth (15a, 15b) obtained transversely thereon, the optical diffuser (5) bearing a first and a second locking lug (19a, 19b) obtained rigidly in the vicinity of a second end of the optical diffuser (5) and projecting internally respectively from the upper edge (14a) and the lower edge (14b) of the optical diffuser (5), a third locking lug (19c) obtained rigidly with the optical device projecting to the rear from the first ends of the optical diffuser (5) and the Fresnel lens member (6).

## Patentansprüche

1. Mehrfachbeleuchtungseinheit (1), insbesondere für ein Fahrzeug, umfassend wenigstens ein Traggehäuse (2), eine erste Beleuchtungseinrichtung, die mit Lichtdiffusionseinrichtungen (5) versehen ist, insbesondere ein Parklicht (3), eine zweite Beleuchtungseinrichtung, die mit Lichtkollimationseinrichtungen (6) versehen ist, insbesondere ein Anzeigelicht (4), und eine Außenlinse (7), wobei die Lichtdiffusionseinrichtungen (5) durch einen Lichtdiffuser (5) gebildet sind, der vor wenigstens der ersten Beleuchtungseinrichtung (3) und der zweiten Beleuchtungseinrichtung (4) angeordnet ist, und die Lichtkollimationseinrichtungen (6) durch ein Fresnel-Linsenbauteil (6), das zwischen die zweite Beleuchtungseinrichtung (4) und den Lichtdiffuser (5) eingefügt ist, gebildet sind, wobei das Fresnel-Linsenbauteil (6) und der Lichtdiffuser (5) starr verbunden sind, um ein Einzelbauteil zu bilden, so dass sie eine optische Vorrichtung (9) bilden, die eingerichtet ist, um die Funktionen der Lichtkollimation und der Lichtdiffusion auszuführen, wobei der Lichtdiffuser (5) und das Fresnel-Linsenbauteil (6) wechselseitig durch ihre jeweiligen ersten Enden (10, 11) verbunden sind, um zwischeneinander einen spitzen Winkel zu bilden, **dadurch gekennzeichnet, dass** der Lichtdiffuser (5) und das Fresnel-Linsenbauteil (6) jeweilige glatte Oberflächen (5a, 6a) umfassen, der Lichtdiffuser (5) eine zweite prismatische Oberfläche (5b) umfasst, das Fresnel-Linsenbauteil (6) eine Oberfläche umfasst, die eine Gruppe von Fresnel-Linsen (6b) trägt, und die ersten glatten Oberflächen (5a, 6a) so angeordnet sind, dass sie einander gegenüberliegen.

2. Beleuchtungseinheit (1) nach Anspruch 1, **dadurch gekennzeichnet, dass** die optische Vorrichtung Einrichtungen zum Schnappverriegeln (15a, 15b) auf dem Traggehäuse (2) umfasst.

3. Beleuchtungseinheit (1) nach einem der vorhergehenden Ansprüche, **dadurch gekennzeichnet, dass** der Lichtdiffuser (5) und das Fresnel-Linsenbauteil (6) des Weiteren durch eine erste und eine zweite Strebe (12a, 12b) verbunden sind, wobei sich die erste Strebe (12a) starr zwischen jeweiligen oberen Kanten (13a, 14a) des Lichtdiffusers (5) und des Fresnel-Linsenbauteils (6) erstreckt und sich die zweite Strebe (12b) starr zwischen jeweiligen unteren Kanten (13b, 14b) des Lichtdiffusers (5) und des Fresnel-Linsenbauteils (6) erstreckt.

4. Beleuchtungseinrichtung (1) nach Anspruch 3, **dadurch gekennzeichnet, dass** die erste und die zweite Strebe (12a, 12b) jede starr wenigstens einen Sperrzahn (15a, 15b) tragen, der quer darauf bereitgestellt ist, der Lichtdiffuser (6) eine erste und eine zweite Verriegelungslasche (19a, 19b) trägt, die starr in der Nähe eines zweiten Endes des Lichtdiffusers (5) bereitgestellt sind und die innen jeweils von der oberen Kante (14a) und der unteren Kante (14b) des Lichtdiffusers (5) vorstehen, und eine dritte Verriegelungslasche (19c), starr mit der optischen Vorrichtung bereitgestellt, die zu dem hinteren Teil von den ersten Enden des Lichtdiffusers (5) und des Fresnel-Linsenbauteils (6) vorsteht.

## Revendications

1. Unité d'éclairage multiple (1), en particulier pour un véhicule, comprenant au moins un boîtier de support (2), un premier dispositif d'éclairage, équipé d'un moyen de diffusion (5) de lumière, en particulier un feu (3) de stationnement, un deuxième dispositif d'éclairage, équipé d'un moyen collimateur (6) de lumière, en particulier un feu (4) de changement de direction, et une lentille externe (7), le moyen de diffusion (5) de lumière étant formé par un diffuseur optique (5) disposé en avant d'au moins le premier (3) et le deuxième (4) dispositifs d'éclairage et ledit moyen collimateur (6) de lumière étant formé par un élément de lentille de Fresnel interposé entre le deuxième dispositif (4) d'éclairage et le diffuseur optique (5), dans laquelle l'élément de lentille de Fresnel (6) et le diffuseur optique (5) sont connectés de façon rigide pour former un composant unique, afin de former un dispositif optique (9) adapté pour exercer les fonctions de collimation et de diffusion de la lumière ; dans laquelle le diffuseur optique (5) et l'élément de lentille de Fresnel (6) sont connectés l'un à l'autre par leurs premières extrémités respectives (10, 11) de manière à former un angle aigu entre eux, **caractérisée en ce que** le diffuseur optique (5) et l'élément de lentille de Fresnel (6) comprennent des surfaces lisses respectives (5a, 6a), le diffuseur optique (5) comprenant une deuxième surface prismatique (5b), l'élément de lentille de Fresnel (6) comprenant une surface portant un groupe de lentilles de Fresnel (6b), et les premières surfaces lisses (5a, 6a) étant disposées l'une en face de l'autre.

2. Unité d'éclairage (1) selon la revendication 1, **caractérisée en ce que** le dispositif optique comprend un moyen de verrouillage par encliquetage (15a, 15b) sur le boîtier de support (2).

3. Unité d'éclairage (1) selon l'une quelconque des revendications précédentes **caractérisée en ce que** le diffuseur optique (5) et l'élément de lentille de Fresnel (6) sont en outre connectés par une première et une deuxième attaches (12a, 12b), la première attache (12a) s'étendant de façon rigide entre des bords supérieurs respectifs (13a, 14a) du diffuseur optique (5) et de l'élément de lentille de Fresnel (6), et la deuxième attache s'étendant de façon rigide entre des bords inférieurs respectifs (13b, 14b) de ce diffuseur et de cet élément.

4. Unité d'éclairage (1) selon la revendication 3, **caractérisée en ce que** la première et la deuxième attache (12a, 12b) portent chacune au moins une dent de verrouillage (15a, 15b) qui y est formée transversalement, le diffuseur optique (5) portant une première et une deuxième pattes de verrouillage (19a, 19b) formées rigidement dans le voisinage d'une deuxième extrémité du diffuseur optique (5) et faisant saillie vers l'intérieur respectivement à partir du bord supérieur (14a) et du bord inférieur (14b) du diffuseur optique (5), une troisième patte de verrouillage (19c) formée rigidement avec le dispositif optique faisant saillie vers l'arrière à partir des premières extrémités du diffuseur optique (5) et de l'élément de lentille de Fresnel (6).
